# EUROPEAN PATENT APPLICATION

(11) **EP 4 783 497 A1**
(43) Date of publication of application: **29.07.2026**
(21) Application number: 26150628.1
(22) Date of filing: 07.01.2026
(51) Int. Cl.: H04L 1/00, H04L 43/50, H04L 43/045, H04L 43/06, G06N 20/00, G06N 3/045, G06N 3/09

(54) **CHANNEL CONSTELLATION IMAGE ANALYSIS USING ARTIFICIAL INTELLIGENCE**

(30) Priority: 14.01.2025 US 202519019657
(71) Applicant: Viavi Solutions Inc., Chandler, AZ 85286 (US)
(72) Inventor: TAHERI, Sayed, Stockport, SK4 2DG (GB); MUHAMMAD, Faris, Edgware, HA8 6RA (GB)
(74) Representative: Murgitroyd & Company

(57) **Abstract**

In some implementations, a device may obtain, as part of an inference phase, a software log associated with a network test. The device may generate a constellation image based on the software log, wherein the constellation image indicates a channel constellation associated with the software log. The device may provide the constellation image to an artificial intelligence or machine learning (AI/ML) system. The device may identify, via the AI/ML system, one or more features associated with the constellation image. The device may identify, via the AI/ML system, a channel impairment associated with the constellation image, wherein the channel impairment is based on the one or more features. The device may identify, via the AI/ML system, a remedy to resolve the channel impairment. The device may provide an output of the remedy.

## Description

### BACKGROUND

A network test device may be used by network equipment manufacturers for function, system integration, capacity, and stress testing and emulation of a plurality of mobile devices, across multiple cells, to set up and test network nodes, such as Fourth Generation (4G) and Fifth Generation (5G) network nodes. A network test device may deliver voice, data, realistic mobility models, and 4G/5G core emulation, thereby providing a comprehensive validation solution. A network test device may ensure that users in a network are obtaining adequate quality of service. A network test device may ensure that the network is satisfying latency and round-trip time requirements for voice and time-critical applications.

### SUMMARY

According to an aspect, there is provided a method, comprising:
obtaining, by a device and as part of an inference phase, a software log associated with a network test;
generating, by the device, a constellation image based on the software log, wherein the constellation image indicates a channel constellation associated with the software log;
providing, by the device, the constellation image to an artificial intelligence or machine learning, AI/ML, system;
identifying, by the device and via the AI/ML system, one or more features associated with the constellation image;
identifying, by the device and via the AI/ML system, a channel impairment associated with the constellation image, wherein the channel impairment is based on the one or more features;
identifying, by the device and via the AI/ML system, a remedy to resolve the channel impairment; and
providing, by the device, an output of the remedy.

In one embodiment, the one or more features include one or more of: a shape of constellation points in the channel constellation, a spread of constellation points in the channel constellation, or a density of constellation points in the channel constellation, and wherein the one or more features are indicative of one or more channel conditions.

In one embodiment, the one or more features are identified using a convolutional neural network, CNN, associated with the AI/ML system; and the channel impairment associated with the constellation image is identified using a classification engine associated with the AI/ML system.

In one embodiment, the channel impairment is one or more of: a noise, a phase shift, a frequency rotation, or an amplitude imbalance.

In one embodiment, the remedy is based on a rule that is mapped to the channel impairment, and wherein the remedy involves one or more of: adjusting an equalizer setting, adjusting an amplitude or phase imbalance, increasing a signal power, or modifying a modulation scheme.

In one embodiment, the method further comprises:
obtaining, by the device, an updated software log, wherein the updated software log is based on the remedy being applied to an additional network test;
generating, by the device, an updated constellation image based on the updated software log;
identifying, by the device and via the AI/ML system, one or more features associated with the updated constellation image; and
determining, by the device and via the AI/ML system, whether the channel impairment has been resolved based on the one or more features associated with the updated constellation image.

In one embodiment, the method further comprises:
storing, by the device, the updated constellation image in a database, wherein the updated constellation image is used for training the AI/ML system.

In one embodiment, the method further comprises:
obtaining, by the device and as part of a training phase, historical data that includes a plurality of constellation images, wherein the plurality of constellation images are labeled with known channel impairments;
applying, by the device, a pre-processing to the plurality of constellation images;
identifying, by the device, features from the plurality of constellation images, wherein the features are associated with the known channel impairments; and
training, by the device, the AI/ML system to associate specific feature patterns with relevant corresponding channel impairments.

In one embodiment, the method further comprises:
obtaining, by the device and as part of a training phase, real data that includes a plurality of constellation images, wherein the real data is associated with one or more real world networks;
applying, by the device, a pre-processing to the plurality of constellation images;
identifying, by the device, features from the plurality of constellation images; and
training, by the device, the AI/ML system to associate specific feature patterns with relevant corresponding channel impairments.

In one embodiment:
the AI/ML system is deployed on an edge server;
the AI/ML system is deployed in a cloud environment;
the AI/ML system is run as a microservice; or
the AI/ML system is associated with a standalone software tool having a user interface.

In one embodiment, the software log is associated with a binary format or a textual format.

According to another aspect, there is provided a non-transitory computer-readable medium storing a set of instructions, the set of instructions comprising:
one or more instructions that, when executed by one or more processors of a device, cause the device to perform the method set out above.

According to a further aspect, there is provided a device, comprising:
one or more memories; and
one or more processors, communicatively coupled to the one or more memories, configured to perform the method set out above.

### BRIEF DESCRIPTION OF THE DRAWINGS

Figs. 1A-1K are diagrams of examples associated with constellation images.
Fig. 2 is a diagram of an example associated with performing a training for a channel constellation image analysis.
Figs. 3A-3B are diagrams of examples associated with performing a channel constellation image analysis using AI/ML.
Fig. 4 is a diagram of an example environment in which systems and/or methods described herein may be implemented.
Fig. 5 is a diagram of example components of one or more devices of Fig. 4.
Fig. 6 is a flowchart of an example process relating to performing a channel constellation image analysis using AI/ML.

### DETAILED DESCRIPTION

The following detailed description of example implementations refers to the accompanying drawings. The same reference numbers in different drawings may identify the same or similar elements.

As the telecommunications industry rapidly evolves into a Fifth Generation (5G) and Sixth Generation (6G) era, the scope and complexity of network testing have expanded at an unprecedented rate. Network testing may involve emulating user equipments (UEs) and their intricate interactions with the network infrastructure. Network testing may enable network operators and equipment manufacturers to evaluate the quality and capacity of their wireless networks, ensure compliance with industry-standard protocols, and effectively troubleshoot issues while optimizing network performance. A network test device may be a specialized device that employs advanced dedicated hardware for network testing.

Network testing may involve the generation of voluminous and highly complex software logs that are indispensable for troubleshooting and defect triaging. Software logs (e.g., telecommunications software logs) associated with a telecommunications space may be far more complex than conventional software logs, which may be due to a vast diversity of commands and parameters configured in real-time under dynamic industrial conditions. The software logs may be based on various commands, which may include protocol commands, debugging commands, and/or graphical user interface (GUI) commands. The software logs may have a structure and/or semantics that often bear little correlation to natural language. For example, the software logs may be in a binary format and/or may include thousands of lines of text, so interpreting the software logs may be difficult. Only expert engineers with extensive experience in the telecommunications space may be able to analyze the software logs to identify issues in a network emulation, but such manual analysis may be inefficient, error prone, less scalable, and/or vulnerable to knowledge deficiencies. When the software logs are analyzed, the issues with the network emulation may be misinterpreted, or missed altogether, thereby degrading an overall performance of the network testing.

In some implementations, an artificial intelligence and/or machine learning (AI/ML) system may be trained on a collection of labeled constellation images. The labeled constellation images may be derived from software logs. The labeled constellation images may be associated with real or artificially-generated training datasets. The labeled constellation images may contain visual examples of healthy channels, as well as various abnormalities associated with specific channel issues. The AI/ML system may learn patterns based on the labeled constellation images. The AI/ML system may analyze the labeled constellation images, identify patterns, and/or identify subtle variations that may be indicative of channel issues. The AI/ML system may adjust equalization settings. The AI/ML system, depending on model findings, may suggest adjusting the equalization settings to compensate for channel impairments, which may involve suggesting an adjustment to parameters of linear or decision-feedback equalization techniques.

In some implementations, after the AI/ML system is trained using the collection of labeled constellation images, the AI/ML system may be used to analyze a constellation image (derived from software logs). The AI/ML system may analyze the constellation image as part of an inference. The constellation image may be associated with a network testing. The AI/ML system may highlight areas that resemble patterns from the training datasets, potentially indicating abnormalities with the constellation image. In other words, the AI/ML system may indicate channel issues associated with the constellation image. The AI/ML system may suggest adjustments based on the indicated abnormalities. In this case, updated software logs may be generated, and an updated constellation image may be derived from the updated software logs. The AI/ML system may evaluate the updated constellation image to evaluate whether the suggested adjustments have helped to resolve the channel issues. For example, the AI/ML system may evaluate whether the updated constellation image is associated with a reduced symbol scatter and a corresponding decrease in cyclic redundancy check (CRC) errors. In other words, the AI/ML system may evaluate whether the suggested adjustments have helped to improve the network testing.

In some implementations, the AI/ML system may receive the constellation image, and the AI/ML system may be responsible for image segmentation, classification, and anomaly detection. A pre-processing of the constellation image may be needed for noise reduction, normalization, and augmentation to improve a quality of the constellation image before an analysis of the constellation image. The AI/ML system may perform a feature extraction from the constellation image, where extracted features (or measurements) may be used to diagnose channel issues and/or to track a resolution of a channel impairment. The AI/ML system may only extract relevant features from the constellation image. The features extracted from the constellation image may include a phase rotation (in terms of degrees), which may incorporate both a frequency error and a phase error. The features extracted from the constellation image may include a percentage of signal clipping at signal edges. The features extracted from the constellation image may include a noise variance that results in a spreading of constellation points. The features extracted from the constellation image may include an estimated block error rate (BLER) value for a constellation signal. In one example, the AI/ML system may be responsible for an image reconstruction (or constellation reconstruction) using various AI/ML-based techniques, such as a Swin transformer, transfer learning, and/or federated learning. The AI/ML system may implement a workflow that involves a constellation image acquisition, the pre-preprocessing, the image segmentation, the feature extraction, and/or the analysis. As a result, the AI/ML system may be used to augment capabilities of test engineers and developers, improve an accuracy of diagnoses, and/or potentially provide remedies.

In some implementations, by generating the AI/ML system using the collection of labeled constellation images and then employing the AI/ML system, complex software logs generated from a network testing may be properly analyzed to identify potential channel issues. The software logs, by themselves, are overly complex and difficult to analyze when identifying the potential channel issues. By converting the software logs to the constellation images, and then feeding the constellation images into the AI/ML system, the software logs may be properly analyzed. The AI/ML system may achieve a better accuracy as compared to a manual analysis, particularly for identifying specific complicated channel impairments. The AI/ML system may analyze the software logs in a more expedited manner as compared to the manual analysis, which may provide additional time for testing, diagnosis, and/or fixing defects in complex cases. Thus, an ability to evaluate the software logs (in the form of constellation images) using the AI/ML system may improve an overall system performance.

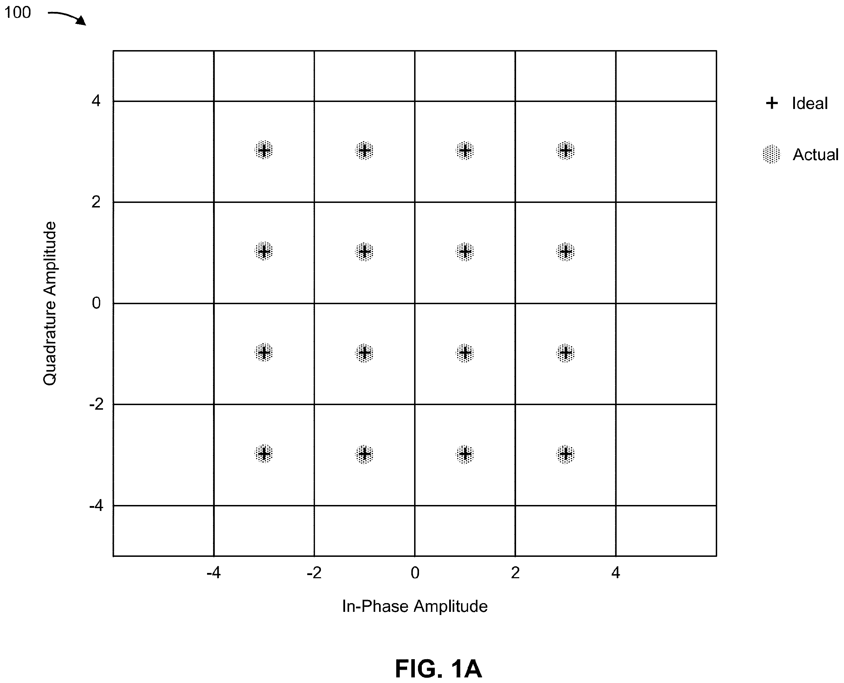

Figs. 1A-1K are diagrams of examples 100 associated with constellation images.

In some implementations, a constellation image may be a valuable tool for diagnosing an issue with a channel (e.g., a communication channel) during a network testing, where the issue may lead to a CRC failure. CRC may be associated with error detection. The constellation image may be derived from a software log, where the software log may be an output of the network testing. The constellation image may be used to visualize an impact of a channel distortion during the network testing. The channel distortion may involve a channel impairment such as noise, a multi-path propagation, and/or filtering that distorts a signal traveling through the channel. The channel impairment may cause received symbols to deviate from ideal positions in the constellation image. When the received symbols deviate significantly from the ideal positions in the constellation image, the received symbols may become more difficult to decode by a receiver, which may increase a probability of bit errors. Deviations of the received symbols from the constellation image may lead to a higher number of bit errors, which may cause the CRC failure at the receiver.

In some implementations, by analyzing the constellation image of an equalized output, information regarding a type of channel distortion may be obtained. For example, scattered points on the constellation image may indicate noise or inter-symbol interference (ISI). An elongated constellation may indicate an amplitude distortion and/or a rotational distortion, which may be caused by phase noise or a frequency offset. In some implementations, by analyzing the constellation image (e.g., characterizing a constellation plot of received data symbols), issues with an automatic gain control (AGC), an automatic frequency control (AFC), and/or a channel estimation may be identified. The constellation image may provide various measurements, such as a mean error, a phase rotation, and/or a noise variance, which may help to assess a signal quality and/or a presence/absence of channel distortion.

In some implementations, the constellation image, by itself, may not directly indicate a root cause of the CRC failure (e.g., a specific noise source), but may be used to indicate the presence/absence of the channel distortion. Other factors, such as modulator imperfections or synchronization issues, may contribute to the CRC failure. In one example, based on an observed constellation distortion, corrective actions may be taken, which may involve improving a channel quality (e.g., adjusting filters and/or increasing a signal strength), implementing a more robust error correction technique, and/or adapting a modulation scheme.

In some implementations, the constellation image (e.g., an equalization output constellation image) may be a visual aid to diagnose channel distortions that manifest as the CRC failure. By analyzing a spread and a shape of constellation points, potential causes may be identified and steps may be taken to improve a communication reliability. The constellation image may provide a visual indication of a signal constellation (or channel constellation).

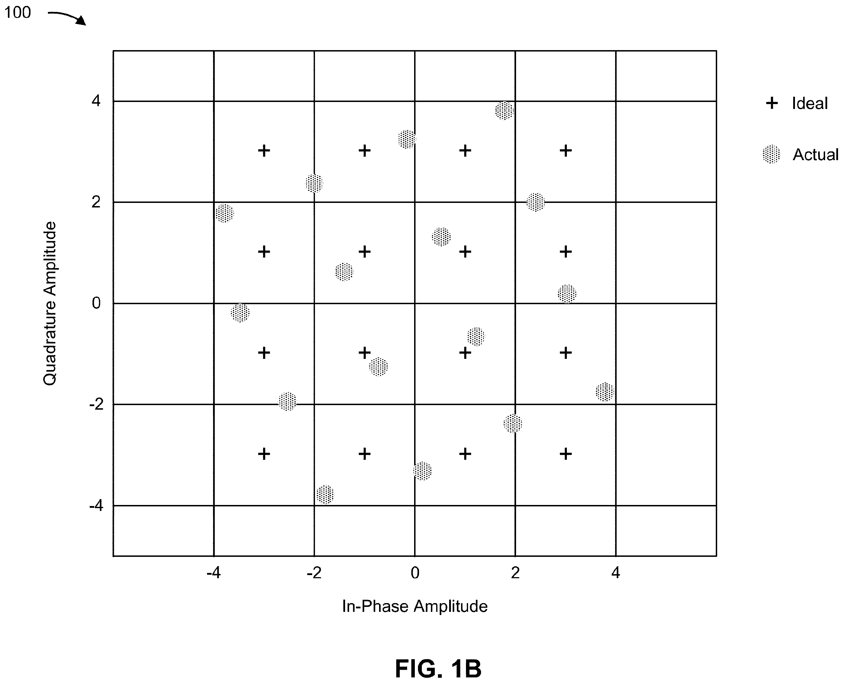

As shown in Fig. 1A, a constellation image may indicate a signal constellation, such as a 16 quadrature amplitude modulation (16-QAM) constellation, with no phase or frequency offset impairing a modulated signal. The constellation image may indicate symbols with no impairments. The constellation image may show ideal symbols and actual symbols, and in this example, the actual symbols may correspond to the ideal symbols. In this example, a modulation order is 16, a sample time is 1 millisecond (ms), a phase offset (in degrees) is 0, and a frequency offset (in Hertz (Hz)) is 0. As shown in Fig. 1B, in a constellation image indicating a signal constellation, a phase offset may impair each point in the signal constellation, which may cause a rotation in a counterclockwise direction for a positive phase offset. The constellation image may show the signal constellation impaired by such settings. In this example, a phase offset (in degrees) is 20, and a frequency offset (in Hz) is 0.

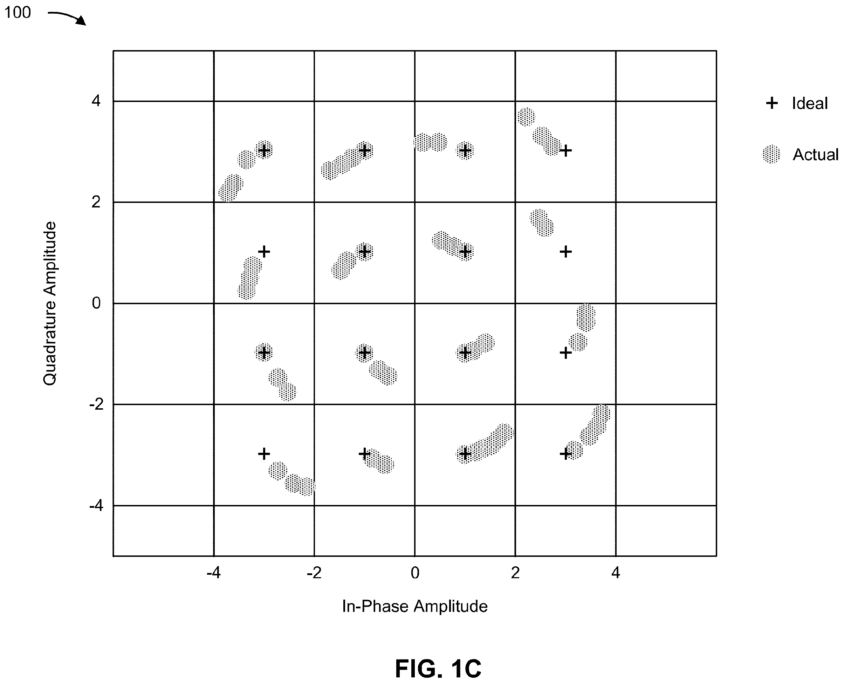

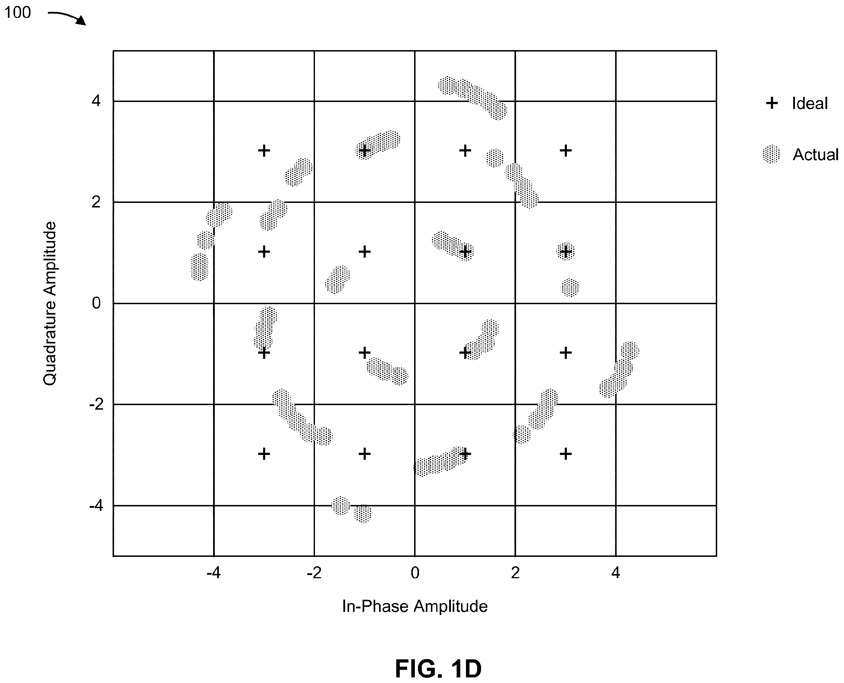

As shown in Fig. 1C, in a constellation image indicating a signal constellation, a frequency offset may change angles of points in the signal constellation linearly over time, which may cause points in the signal constellation to shift radially in a counterclockwise direction for a positive frequency offset. Although the points may be radially shifted, their magnitude may be unchanged. The constellation image may show the constellation image impaired by such settings. In this example, a phase offset (in degrees) is 0, and a frequency offset (in Hz) is 0.5. As shown in Fig. 1D, in a constellation image indicating a signal constellation, both a phase offset and a frequency offset may affect the signal constellation. The constellation image may show the signal constellation impaired by such settings. In this example, a phase offset (in degrees) is 0, and a frequency offset (in Hz) is 0.5.

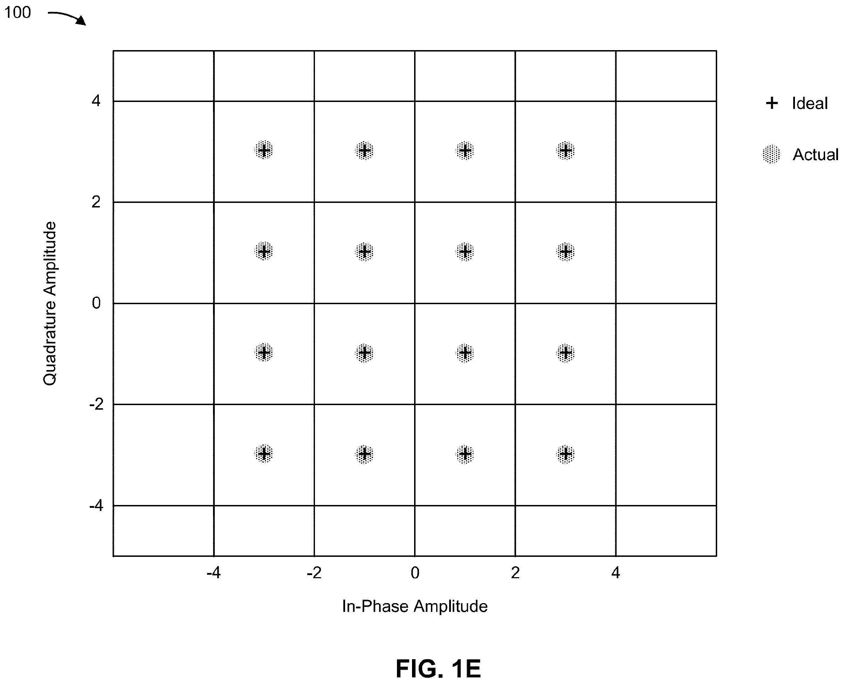

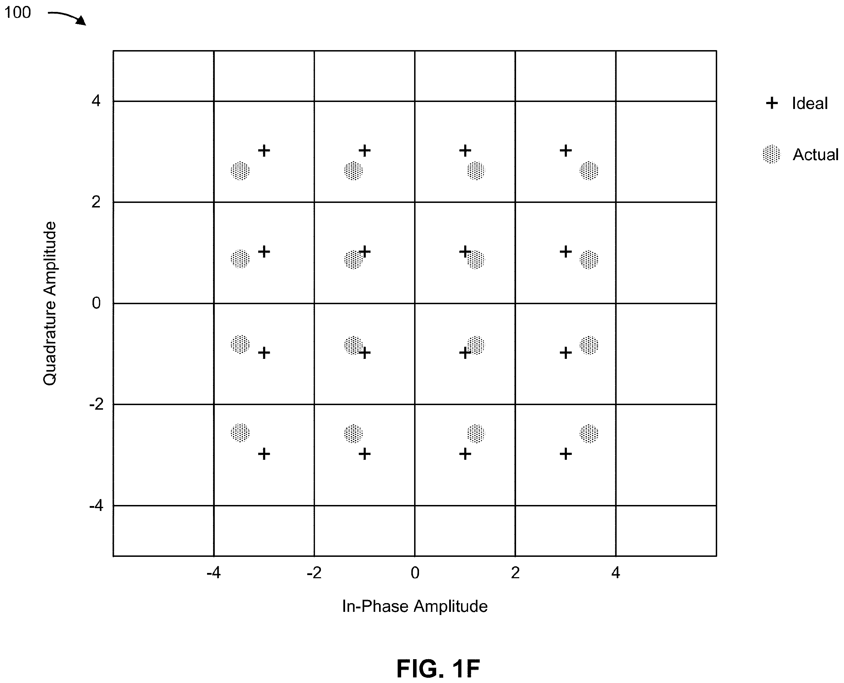

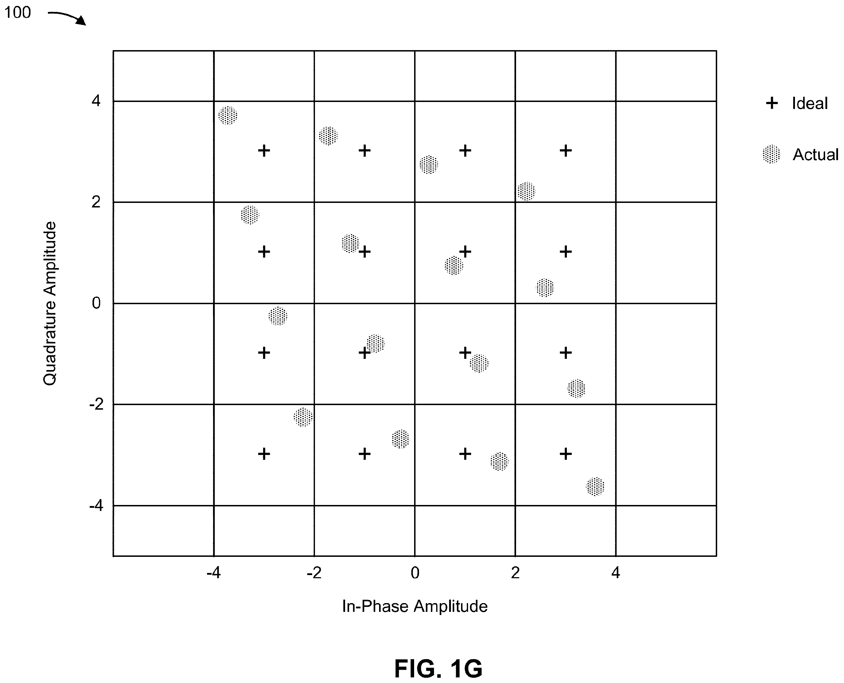

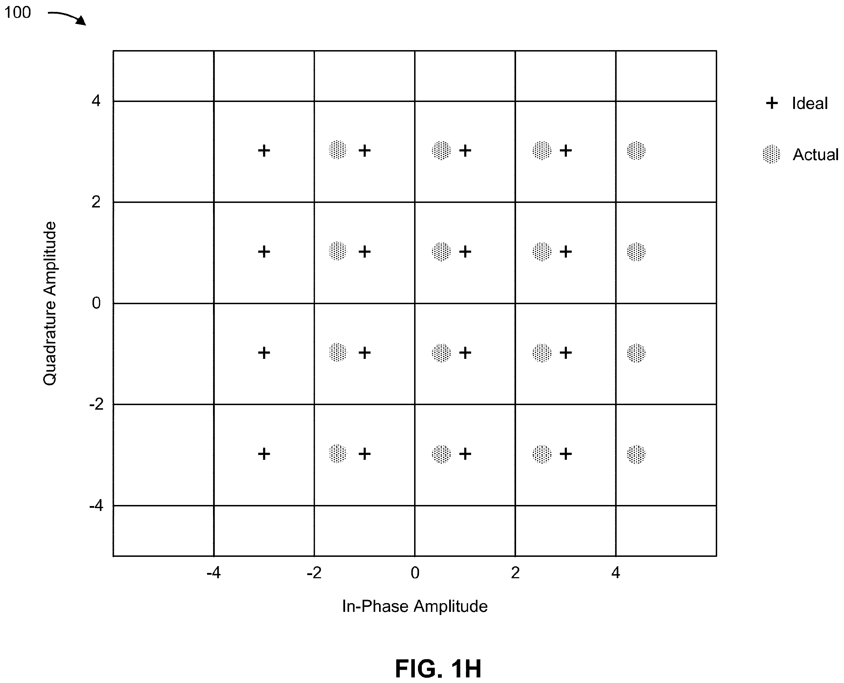

As shown in Fig. 1E, in a constellation image indicating a signal constellation, zero values may be applied for all impairments of the signal constellation. Signal samples and reference constellation points may align and overlay with each other in the constellation image. As shown in Fig. 1F, in a constellation image indicating a signal constellation, only an amplitude imbalance impairment may be applied to the signal constellation. The signal constellation may be elongated to a rectangular shape. In this example, an amplitude imbalance is 3 decibels (dB). As shown in Fig. 1G, in a constellation image indicating a signal constellation, only a phase imbalance impairment may be applied to the signal constellation. The signal constellation may be shifted to a rhombus shape. In this example, a phase imbalance (in degrees) is 30. As shown in Fig. 1H, in a constellation image indicating a signal constellation, only an in-phase direct current (DC) offset impairment may be applied to the signal constellation. The signal constellation may translate in a direction of an in-phase DC offset. In this example, the in-phase DC offset is 1.5.

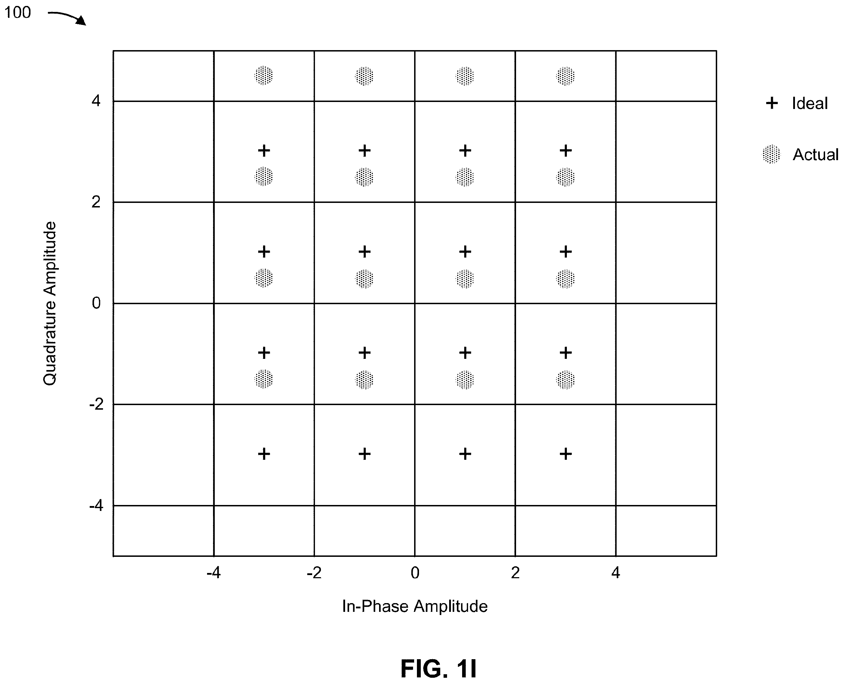

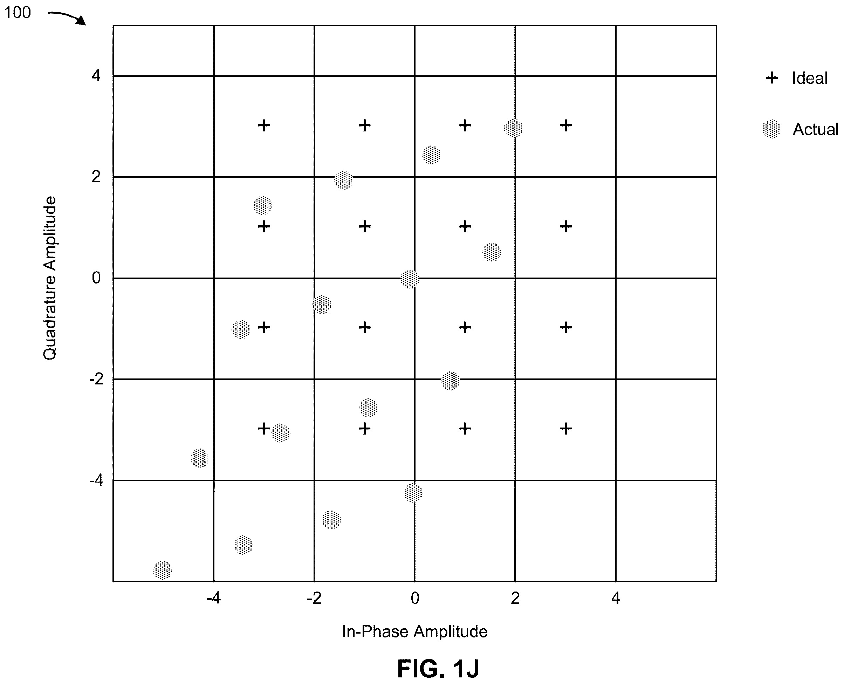

As shown in Fig. 1I, in a constellation image indicating a signal constellation, only a quadrature DC offset impairment may be applied to the signal constellation. The signal constellation may translate in a direction of a quadrature DC offset. In this example, the quadrature DC offset is 1.5. As shown in Fig. 1J, in a constellation image indicating a signal constellation, impairments may be applied as negative values, and all imbalance impairments may be set to nonzero negative values in the signal constellation. In this example, an amplitude imbalance is 3 dB, a phase imbalance (in degrees) is -30, an in-phase DC offset is -1.5, and a quadrature DC offset is -1.5.

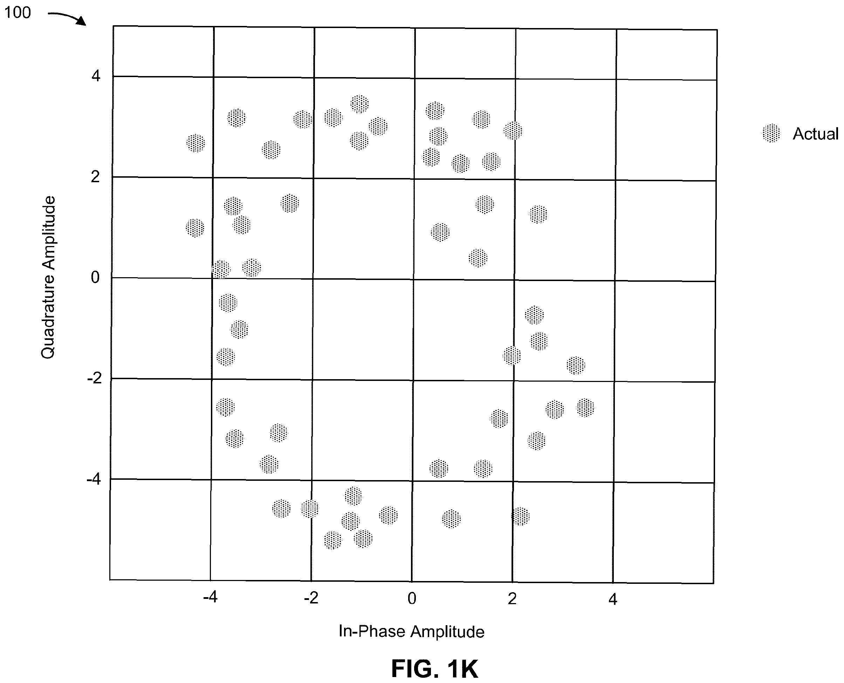

As shown in Fig. 1K, a constellation image may indicate a signal constellation associated with a real world network (e.g., a real world scenario). The constellation image may be derived from real world user setups, which may include various network nodes, various antenna configurations, various network configurations, etc. The constellation image may not be from simulated data, but rather may be from real data associated real networks. The constellation image may be derived from user data sets, user setups, and/or system testing. The constellation image may have noise and/or interference, which may result in an imperfect constellation image. The noise and/or interference may correspond to real noise and/or real interference associated with the real world network.

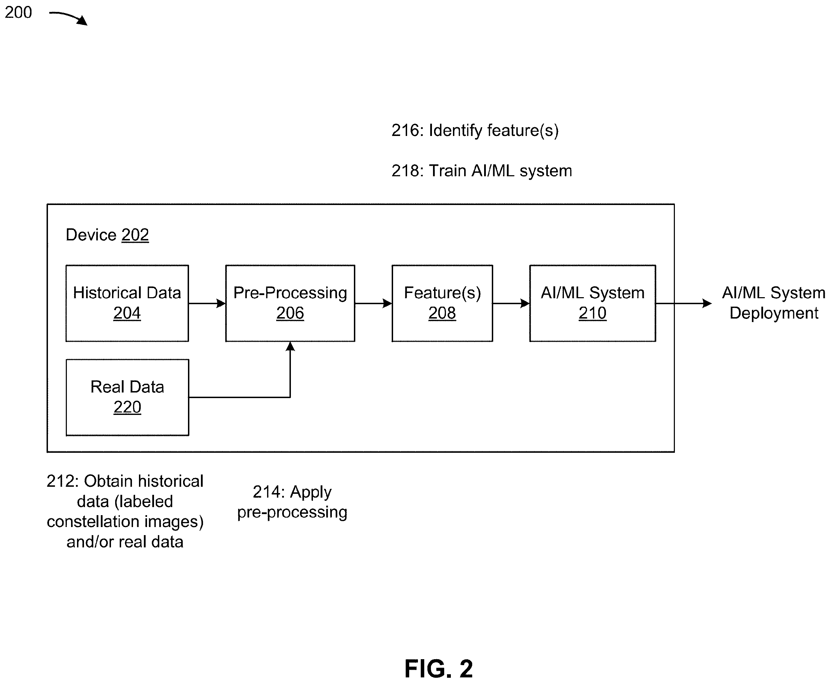

In some implementations, constellation images (e.g., as shown in Figs. 1A-1K) may be used as a training dataset to train an AI/ML system. At least some of the constellation images may be labeled to create labeled constellation images, and the AI/ML system may be trained using the labeled constellation images. Constellation images associated with real world networks may or may not be labeled. After the AI/ML system is trained, the AI/ML system may be used to analyze software logs. The AI/ML system may convert the software logs into a constellation image (e.g., as shown in Figs. 1A-1K, but without any labels), and then the AI/ML system may analyze the constellation image in order to evaluate a network testing. The AI/ML system is further described with respect to Figs. 2-3.

As indicated above, Figs. 1A-1K are provided as examples. Other examples may differ from what is described with regard to Figs. 1A-1K.

Fig. 2 is a diagram of an example 200 associated with performing a training for a channel constellation image analysis.

As shown by reference number 212, a device 202 may obtain, as part of a training phase, historical data 204 and/or real data 220. The historical data 204 and/or the real data 220 may include a plurality of constellation images. Examples of constellation images are shown in Figs. 1A-1K. The plurality of constellation images may be labeled with known channel impairments. The known channel impairments may be associated with a noise, a phase shift, a frequency rotation, and/or an amplitude imbalance. In other words, in the historical data 204, a given constellation image may be labeled with a specific channel impairment. The historical data 204 may also include constellation examples without any channel impairment. The real data 220 may include a plurality of constellation images associated with real world networks (e.g., real world situations). The real data 220 may be derived from real world user setups, which may include various network nodes, various antenna configurations, various network configurations, etc. The real data 220 may not be simulated data, but rather real data from real networks. The real data 220 may be derived from user data sets, user setups, and/or system testing. In some cases, the real data 220 may have noise and/or interference, which may result in imperfect constellation images. As part of the training phase, the historical data 204 may be enhanced by incorporating the real data 220.

As shown by reference number 214, the device 202 may apply a pre-processing 206 to the plurality of constellation images (e.g., constellation images associated with both the historical data 204 and the real data 220). The device 202 may apply the pre-processing 206 to enable the plurality of constellation images to be used by an AI/ML system 210. As shown by reference number 216, the device 202 may identify features 208 from the plurality of constellation images, where the features 208 may be associated with the known channel impairments. In other words, the device 202 may recognize the features 208 and learn to associate certain features with certain channel impairments. The device 202 may learn to associate certain features with certain channel impairments even in the presence of noise and/or interference in the plurality of constellation images. As shown by reference number 218, the device 202 may train the AI/ML system 210 to associate specific feature patterns with relevant corresponding channel impairments. The AI/ML system 210 may be able to be deployed in various locations/environments. For example, the AI/ML system 210 may be deployed on an edge server or in a cloud environment. In another example, the AI/ML system 210 may be run as a microservice or as a standalone software tool having a user interface.

In some implementations, the device 202 may use a computing environment to model a wireless channel, a transmitter, and a receiver. The device 202 may generate constellation plots for scenarios involving frequency errors, phase errors, IQ imbalances, and/or channel interference. The device 202 may produce data covering different modulation schemes (e.g., all modulation schemes). Such data and/or constellation images may be derived from the historical data 204. The device 202 may enhance such datasets with live data collected from user setups. The device 202 may train the AI/ML system 210 or a deep neural network (DNN) using constellation images captured under various channel conditions and noise conditions. The device 202 may utilize the trained AI/ML system 210 to classify constellations into multiple categories, such as good, bad, or needs improvement, based on debugging logs and images. The device 202 may use the trained AI/ML system 210 to identify radio frequency (RF) issues early by suggesting potential problems related to power, signal-to-interference ratio (SIR), frequency, and/or phase.

In some implementations, the device 202 may employ a data collection unit, which may be responsible for gathering a diverse dataset of constellation images and/or source logs. The diverse dataset of constellation images may include training samples of healthy reference channel constellations (e.g., no channel impairments) and training samples of unhealthy reference channel constellations (e.g., having known channel impairments). The diverse dataset of constellation images may be a labeled dataset. The channel impairments may include noise, phase shifts, frequency rotations, and/or amplitude imbalances. The device 202 may employ a pre-processing unit (PPU), which may be responsible for conducting pre-processing of the constellation images and data in order to normalize and enhance relevant features in the constellation images. The pre-processing may involve an image resizing, a suitable filtering, and/or a conversion to a suitable format type for the AI/ML system 210. The device 202 may implement a custom pre-processing pipeline that leverages domain-specific knowledge to optimize the pre-processing, which may involve a utilization of adaptive filtering to remove noise and/or specialized transformations to highlight specific types of channel impairments.

In some implementations, the device 202 may employ a feature extraction and engineering unit (FEEU) to extract relevant features from the constellation images. The features may vary depending on whether or not a channel impairment is present and/or a type of the channel impairment. For example, a first channel constellation associated with no channel impairment may produce a first set of features, a second channel constellation associated with a first type of channel impairment may produce a second set of features, and a third channel constellation associated with a second type of channel impairment may produce a third set of features, where each of the first, second, and third sets of features may be different from each other. In one example, the device 202 may employ a convolutional neural network (CNN) to automatically extract meaningful features from the constellation images. The CNN may be capable of recognizing feature patterns and spatial relationships in images. For example, the CNN may be able to associate the first channel constellation with a first feature pattern, the second channel constellation with a second feature pattern, and the third channel constellation with a third feature pattern. The CNN may be trained to identify various features, such as a shape, spread, and/or density of constellation points in the constellation images, which may be indicative of different channel conditions. The CNN may employ a custom CNN architecture that is tailored to the unique characteristics of constellation images. The CNN may incorporate domain-specific knowledge, such as using layers that are sensitive to rotational or translational symmetries. Multiple category-expert CNNs may be utilized to address different varieties of constellation images.

In some implementations, the AI/ML system 210 may include a lightweight, edge-deployable classifier, such as a support vector machine (SVM). The classifier may be used to categorize the constellation images based on the extracted features. The classifier may be trained on the labeled dataset to associate specific feature patterns with relevant corresponding impairments. After the classifier is sufficiently trained, the AI/ML system 210 may be deployed in a field.

As indicated above, Fig. 2 is provided as an example. Other examples may differ from what is described with regard to Fig. 2.

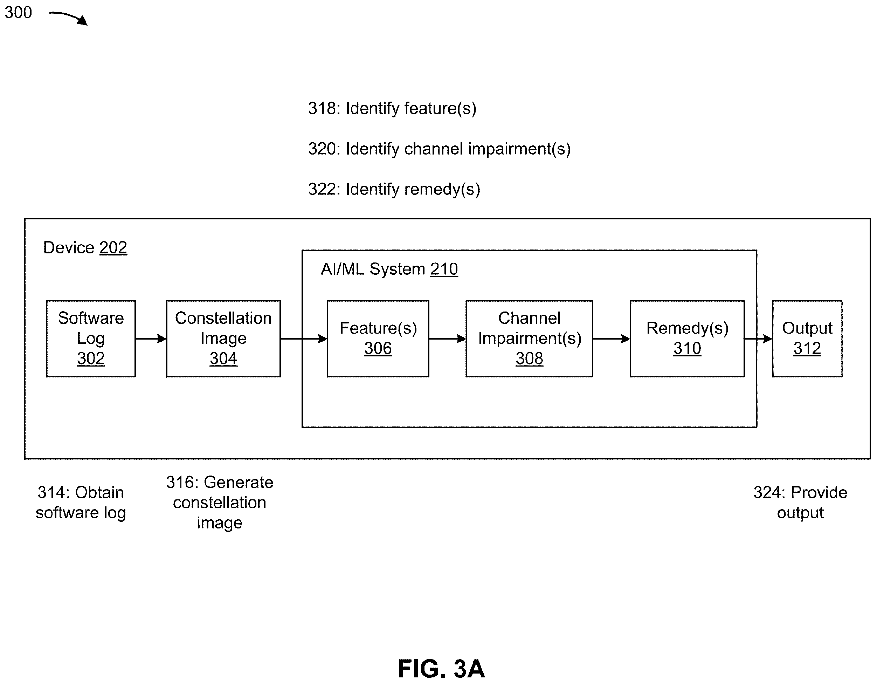

Figs. 3A-3B are diagrams of examples 300 associated with performing a channel constellation image analysis using AI/ML.

As shown in Fig. 3A, a device 202 may access an AI/ML system 210. The AI/ML system 210 may run directly on the device 202, or the AI/ML system 210 may run on a separate device and be accessible to the device 202. The AI/ML system 210 may be responsible for performing the channel constellation image analysis. The AI/ML system 210 may be deployed on an edge server. The AI/ML system 210 may be deployed in a cloud environment. The AI/ML system 210 may be run as a microservice. The AI/ML system 210 may be associated with a standalone software tool having a user interface.

As shown by reference number 314, the device 202 may obtain a software log 302, which may occur during an inference phase. The software log 302 may be produced by a network test device (not shown). The software log 302 may be a telecommunications software log. The software log 302 may be associated with a network testing. The software log 302 may be associated with a binary format or a textual format. The software log 302 may be based on various commands, which may include protocol commands, debugging commands, and/or GUI commands. The device 202 may obtain the software log 302 in order to perform the channel constellation image analysis.

As shown by reference number 316, the device 202 may generate a constellation image 304 from the software log 302. The device 202 may process the software log 302, extract relevant information from the software log 302, and then generate the constellation image 304 using the relevant information. The constellation image 304 may indicate a channel constellation associated with the software log 302. The constellation image 304 may provide a visual indication of a channel associated with the network testing. In some cases, the constellation image 304 may visually indicate various forms of channel distortion during the network testing. The device 202 may provide the constellation image 304 to the AI/ML system 210. Examples of the constellation image 304 are shown in Figs. 1A-1K.

As shown by reference number 318, the device 202 may, via the AI/ML system 210, identify one or more features 306 associated with the constellation image 304. The one or more features 306 may include a shape of constellation points in the channel constellation, a spread of constellation points in the channel constellation, and/or a density of constellation points in the channel constellation. The one or more features 306 may be indicative of one or more channel conditions. In one example, the device 202 may identify the one or more features 306 using a CNN associated with the AI/ML system 210. Alternatively, the device 202 may utilize another mechanism for identifying the one or more features 306 associated with the constellation image 304.

As shown by reference number 320, the device 202 may, via the AI/ML system 210, identify a channel impairment 308 associated with the constellation image 304. The channel impairment 308 may be a noise, a phase shift, a frequency rotation, and/or an amplitude imbalance. In one example, the device 202 may identify the channel impairment 308 using a classification engine associated with the AI/ML system 210. The channel impairment 308 may be identified based on the one or more features 306. The AI/ML system 210 may be used to correlate the one or more features 306 with the channel impairment 308 that is to be expected based on the one or more features 306. In other words, the AI/ML system 210 may be trained to recognize the one or more features 306 and identify possible channel impairments 308 that are typically associated with the one or more features 306.

As shown by reference number 322, the device 202 may, via the AI/ML system 210, identify a remedy 310 (or multiple remedies) to resolve the channel impairment 308. The remedy 310 may be based on a rule that is mapped to the channel impairment 308. The remedy 310 may involve adjusting an equalizer setting, adjusting an amplitude or phase imbalance, increasing a signal power, and/or modifying a modulation scheme. For example, the remedy 310 may involve adding a signal power of 3 dB or adding a phase of 30 degrees, which may aim to resolve the channel impairment 308. The AI/ML system 210 may be used to identify the remedy 310 that is expected to resolve the specific channel impairment 308. In other words, the AI/ML system 210 may be trained based on prior knowledge that certain remedies are typically effective in resolving specific channel impairments.

As shown by reference number 324, the device 202 may provide an output 312 of the remedy 310. The device 202 may provide the output 312 via a user interface. The output 312 may indicate specific details associated with the remedy 310 (e.g., add 3 dB or add 30 degrees in phase, which may serve to correct an amplitude or phase imbalance). The output 312 may allow for various parameters of the network testing to be adjusted, and then the network testing may be repeated with the adjusted parameters.

In a traditional approach, interpreting software logs and/or constellation images derived from the software logs required expertise and was a time-consuming approach. In some implementations, the AI/ML system 210 may provide an AI/ML-driven solution, which may enable faster and more accurate diagnoses of channel issues, as well as suggestions for potential remedies.

In some implementations, at the inference phase, after receiving the constellation image 304 (e.g., a new constellation image), the AI/ML system 210 may utilize the CNN to extract and engineer the relevant features 306, and the AI/ML system 210 may utilize the classification engine to classify the constellation image 304 and to provide a diagnosis of a likely issue associated with the constellation image 304. The AI/ML system 210 may implement an ensemble learning approach that combines multiple classifiers to improve accuracy and robustness. The AI/ML system 210 may use different types of classifiers, such as CNNs, SVMs, and/or Random Forest, and/or the AI/ML system 210 may train multiple instances of the same classifier on different subsets of data.

In some implementations, the AI/ML system 210 may be able to suggest potential remedies based on a diagnosed issue (e.g., a diagnosed channel impairment). The AI/ML system 210 may leverage a knowledge base or a rule-based system that maps specific impairments to recommended corrective actions, which may be based on observations and analysis in the software log 302 and corresponding constellation image 304. The recommended corrective actions may involve adjusting equalizer settings, increasing signal power, and/or modifying modulation schemes, which may serve to remedy or rectify the diagnosed issue. In some implementation, the AI/ML system 210 may provide remedy suggestions which are based on a deep reinforcement learning. The AI/ML system 210 may learn optimal corrective actions, which may involve simulating effects of different actions on the constellation image 304 and rewarding predicted actions that lead to a channel improvement in subsequent constellation images.

In some implementations, the AI/ML system 210 may be implemented using an AI/ML framework. The AI/ML system 210, after training, may be deployed as a software tool or may be integrated into existing communication system monitoring and diagnostic platforms. The AI/ML system 210 may be containerized, deployed in the cloud environment, run as the microservice, or run as a standalone software tool with a user interface component enabling user interactions. The AI/ML system 210 may be used to continuously monitor constellation images in real-time, and may provide immediate alerts and suggestions when channel issues are detected in the constellation images.

In some implementations, the AI/ML system 210 may use a specific combination of feature extraction, classification, and remedy suggestion. The AI/ML system 210 may be utilized for channel issue diagnosis and resolution. The AI/ML system 210 may be based on an overall system architecture, various AI/ML algorithms, and/or various engines/units working together in order to provide the channel issue diagnosis and resolution.

In some implementations, the AI/ML system 210 may be used for automated constellation image analysis and diagnosis. The AI/ML system 210 may enable automation, which may eliminate the need for manual interpretation of constellation images, thereby saving time and resources. The AI/ML system 210 may provide improved precision, which may be due to an ability to achieve high accuracy in diagnosing issues (e.g. channel impairments). The high accuracy may surpass human experts in certain cases, as the AI/ML system 210 has an ability to process an entirety of possible historical data, whereas no single human expert has ever seen an entirety of defect cases in the past. The AI/ML system 210 may provide improved speed. For example, the AI/ML system 210 may provide rapid analysis and diagnosis, which may enable a faster response to channel problems. The response may not be impacted by time zone differences, an availability of expert human engineers, and so on. The AI/ML system 210 may provide improved accessibility. For example, the AI/ML system 210 may make an advanced system analysis accessible to a wider range of users, not just experts or entities with large support contracts or technical capabilities.

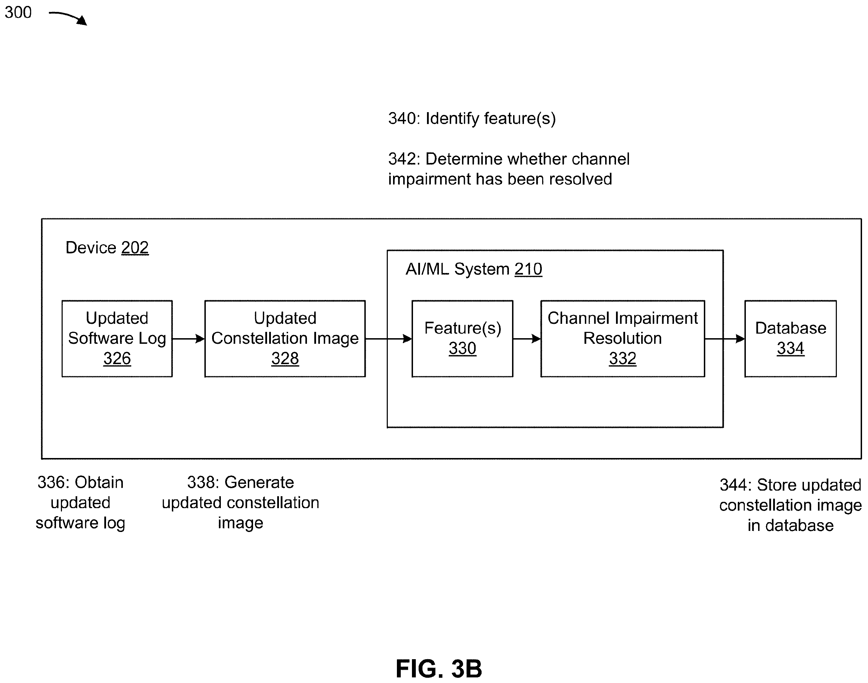

As shown in Fig. 3B, and as shown by reference number 336, the device 202 may obtain an updated software log 326. The updated software log 326 may be based on the remedy 310 being applied to an additional network test. In other words, the remedy 310 may be applied in the additional network test, and then the updated software log 326 may be obtained from the additional network test. Applying the remedy 310 may involve applying various types of equalization actions (e.g., adding a certain number of dBs, or adding a certain number of degrees of phase). As shown by reference number 338, the device 202 may generate an updated constellation image 328 based on the updated software log 326. The updated constellation image 328 may be a reconstructed constellation image that incorporates the remedy 310. As shown by reference number 340, the device 202 may identify, via the AI/ML system 210, one or more features 330 associated with the updated constellation image 328. The one or more features 330 associated with the updated constellation image 328 may be different than the one or more features 306 associated with the constellation image 304, which may be based on the remedy 310 being applied. As shown by reference number 342, the device 202 may determine, via the AI/ML system 210, whether a channel impairment resolution 332 has occurred after the remedy 310 has been applied. The device 202 may determine, via the AI/ML system 210, whether the channel impairment 308 has been resolved based on the one or more features 330 associated with the updated constellation image 328. In other words, the device 202 may validate whether corrections applied based on a prediction have been successful in reducing or eliminating the channel impairment 308. In one example, the device 202 may provide an additional output regarding whether the channel impairment 308 has been resolved. As shown by reference number 344, the device 202 may store the updated constellation image 328 in a database 334, where the updated constellation image 328 may be used for training the AI/ML system 210.

As indicated above, Figs. 3A-3B are provided as examples. Other examples may differ from what is described with regard to Figs. 3A-3B. The number and arrangement of devices shown in Figs. 3A-3B are provided as an example. In practice, there may be additional devices, fewer devices, different devices, or differently arranged devices than those shown in Figs. 3A-3B. Furthermore, two or more devices shown in Figs. 3A-3B may be implemented within a single device, or a single device shown in Figs. 3A-3B may be implemented as multiple, distributed devices. Additionally, or alternatively, a set of devices (e.g., one or more devices) shown in Figs. 3A-3B may perform one or more functions described as being performed by another set of devices shown in Figs. 3A-3B.

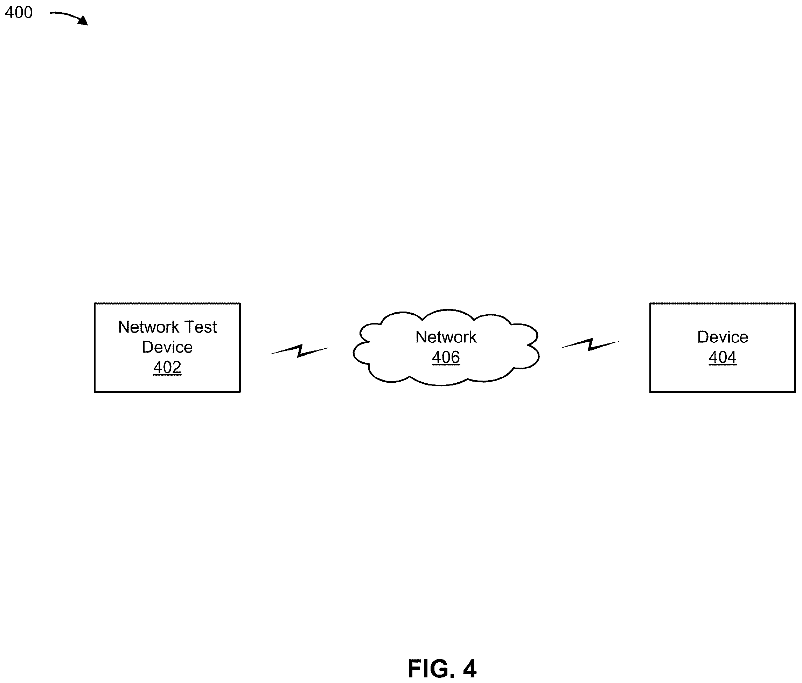

Fig. 4 is a diagram of an example environment 400 in which systems and/or methods described herein may be implemented. As shown in Fig. 4, environment 400 may include a network test device 402, a device 404 (e.g., device 202), and a network 406. Devices of environment 400 may interconnect via wired connections, wireless connections, or a combination of wired and wireless connections.

The network test device 402 may include one or more devices capable of receiving, processing, storing, routing, and/or providing information associated with performing a channel constellation image analysis, as described elsewhere herein. The network test device 402 may include a computing device. The network test device 402 may be used by network equipment manufacturers for function, system integration, capacity, and stress testing and emulation of a plurality of mobile devices, across multiple cells, to set up and test network nodes. The network test device 402 may deliver voice, data, realistic mobility models, and 4G/5G core emulation, thereby providing a comprehensive validation solution. The network test device 402 may ensure that users in a network are obtaining adequate quality of service. The network test device 402 may ensure that the network is satisfying latency and round-trip time requirements for voice and time-critical applications.

The device 404 may include one or more devices capable of receiving, generating, storing, processing, providing, and/or routing information associated with performing a channel constellation image analysis, as described elsewhere herein. The device 404 may include a communication device and/or a computing device. For example, the device 404 may include a server, such as an application server, a client server, a web server, a database server, a host server, a proxy server, a virtual server (e.g., executing on computing hardware), or a server in a cloud computing system. The device 404 may be an edge device. The device 404 may be a mobile device, a desktop computer, or a laptop computer. The device 404 may be associated with a user interface. In some implementations, the device 404 may include computing hardware used in a cloud computing environment.

The network 406 may include one or more wired and/or wireless networks. For example, the network 406 may include a cellular network (e.g., a 5G network, a 4G network, a Long Term Evolution (LTE) network, a Third Generation (3G) network, a code division multiple access (CDMA) network, etc.), a public land mobile network (PLMN), a local area network (LAN), a wide area network (WAN), a metropolitan area network (MAN), a telephone network (e.g., the Public Switched Telephone Network (PSTN)), a private network, an ad hoc network, an intranet, the Internet, a fiber optic-based network, and/or a combination of these or other types of networks. The network 406 may enable communication among the one or more devices of environment 400.

The number and arrangement of devices and networks shown in Fig. 4 are provided as an example. In practice, there may be additional devices and/or networks, fewer devices and/or networks, different devices and/or networks, or differently arranged devices and/or networks than those shown in Fig. 4. Furthermore, two or more devices shown in Fig. 4 may be implemented within a single device, or a single device shown in Fig. 4 may be implemented as multiple, distributed devices. Additionally, or alternatively, a set of devices (e.g., one or more devices) of environment 400 may perform one or more functions described as being performed by another set of devices of environment 400.

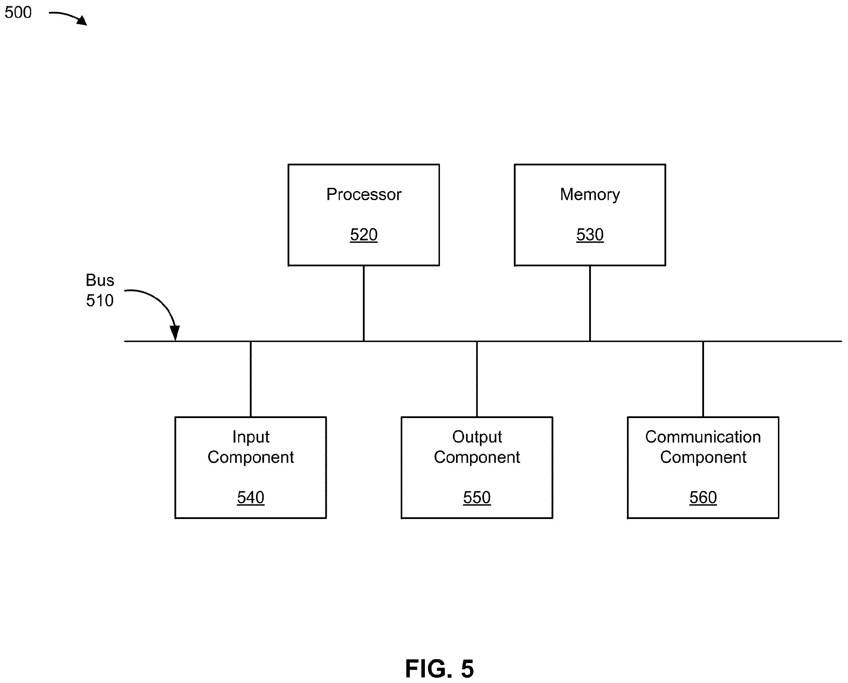

Fig. 5 is a diagram of example components of a device 500 associated with performing a channel constellation image analysis. The device 500 may correspond to a device (e.g., device 202). In some implementations, the device may include one or more devices 500 and/or one or more components of the device 500. As shown in Fig. 5, the device 500 may include a bus 510, a processor 520, a memory 530, an input component 540, an output component 550, and/or a communication component 560.

The bus 510 may include one or more components that enable wired and/or wireless communication among the components of the device 500. The bus 510 may couple together two or more components of Fig. 5, such as via operative coupling, communicative coupling, electronic coupling, and/or electric coupling. For example, the bus 510 may include an electrical connection (e.g., a wire, a trace, and/or a lead) and/or a wireless bus. The processor 520 may include a central processing unit, a graphics processing unit, a microprocessor, a controller, a microcontroller, a digital signal processor, a field-programmable gate array, an application-specific integrated circuit, and/or another type of processing component. The processor 520 may be implemented in hardware, firmware, or a combination of hardware and software. In some implementations, the processor 520 may include one or more processors capable of being programmed to perform one or more operations or processes described elsewhere herein.

The memory 530 may include volatile and/or nonvolatile memory. For example, the memory 530 may include random access memory (RAM), read only memory (ROM), a hard disk drive, and/or another type of memory (e.g., a flash memory, a magnetic memory, and/or an optical memory). The memory 530 may include internal memory (e.g., RAM, ROM, or a hard disk drive) and/or removable memory (e.g., removable via a universal serial bus connection). The memory 530 may be a non-transitory computer-readable medium. The memory 530 may store information, one or more instructions, and/or software (e.g., one or more software applications) related to the operation of the device 500. In some implementations, the memory 530 may include one or more memories that are coupled (e.g., communicatively coupled) to one or more processors (e.g., processor 520), such as via the bus 510. Communicative coupling between a processor 520 and a memory 530 may enable the processor 520 to read and/or process information stored in the memory 530 and/or to store information in the memory 530.

The input component 540 may enable the device 500 to receive input, such as user input and/or sensed input. For example, the input component 540 may include a touch screen, a keyboard, a keypad, a mouse, a button, a microphone, a switch, a sensor, a global positioning system sensor, a global navigation satellite system sensor, an accelerometer, a gyroscope, and/or an actuator. The output component 550 may enable the device 500 to provide output, such as via a display, a speaker, and/or a light-emitting diode. The communication component 560 may enable the device 500 to communicate with other devices via a wired connection and/or a wireless connection. For example, the communication component 560 may include a receiver, a transmitter, a transceiver, a modem, a network interface card, and/or an antenna.

The device 500 may perform one or more operations or processes described herein. For example, a non-transitory computer-readable medium (e.g., memory 530) may store a set of instructions (e.g., one or more instructions or code) for execution by the processor 520. The processor 520 may execute the set of instructions to perform one or more operations or processes described herein. In some implementations, execution of the set of instructions, by one or more processors 520, causes the one or more processors 520 and/or the device 500 to perform one or more operations or processes described herein. In some implementations, hardwired circuitry may be used instead of or in combination with the instructions to perform one or more operations or processes described herein. Additionally, or alternatively, the processor 520 may be configured to perform one or more operations or processes described herein. Thus, implementations described herein are not limited to any specific combination of hardware circuitry and software.

The number and arrangement of components shown in Fig. 5 are provided as an example. The device 500 may include additional components, fewer components, different components, or differently arranged components than those shown in Fig. 5. Additionally, or alternatively, a set of components (e.g., one or more components) of the device 500 may perform one or more functions described as being performed by another set of components of the device 500.

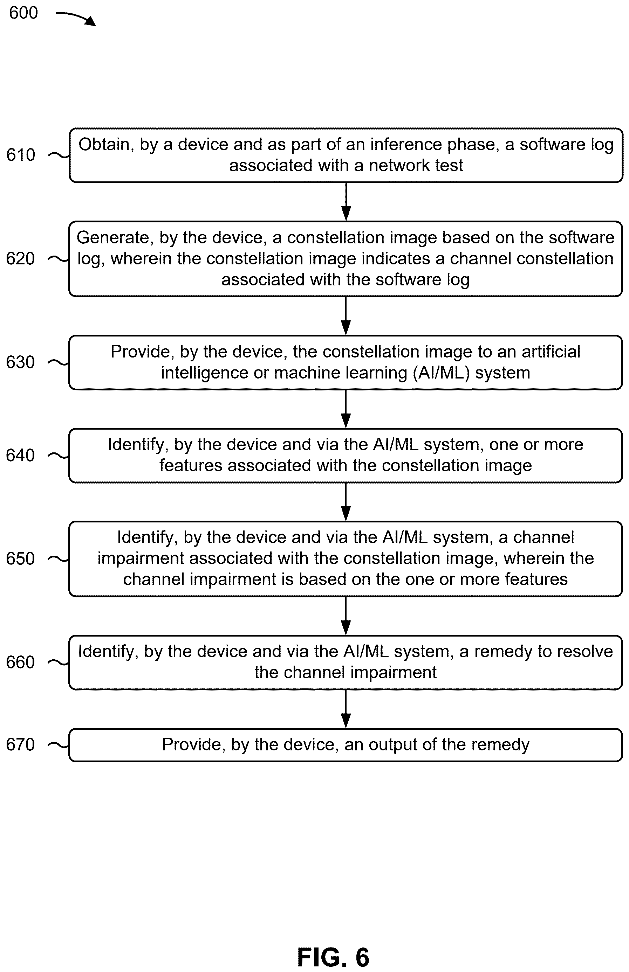

Fig. 6 is a flowchart of an example process 600 associated with performing a channel constellation image analysis using AI/ML. In some implementations, one or more process blocks of Fig. 6 may be performed by a device (e.g., device 202). Additionally, or alternatively, one or more process blocks of Fig. 6 may be performed by one or more components of device 500, such as processor 520, memory 530, input component 540, output component 550, and/or communication component 560.

As shown in Fig. 6, process 600 may include obtaining, by the device and as part of an inference phase, a software log associated with a network test (block 610). The software log may be associated with a binary format or a textual format. The network test may involve emulating UEs and their interactions with a network infrastructure.

As shown in Fig. 6, process 600 may include generating, by the device, a constellation image based on the software log, wherein the constellation image indicates a channel constellation associated with the software log (block 620). The constellation image may provide a visual indication of the channel constellation.

As shown in Fig. 6, process 600 may include providing, by the device, the constellation image to an AI/ML system (block 630). The AI/ML system may include various components, such as a CNN and/or a classification engine. The AI/ML system may be deployed on an edge server. The AI/ML system may be deployed in a cloud environment. The AI/ML system may be run as a microservice. The AI/ML system may be associated with a standalone software tool having a user interface.

As shown in Fig. 6, process 600 may include identifying, by the device and via the AI/ML system, one or more features associated with the constellation image (block 640). The one or more features may include a shape of constellation points in the channel constellation, a spread of constellation points in the channel constellation, and/or a density of constellation points in the channel constellation. The one or more features may be indicative of one or more channel conditions. The device may identify the one or more features using the CNN associated with the AI/ML system.

As shown in Fig. 6, process 600 may include identifying, by the device and via the AI/ML system, a channel impairment associated with the constellation image, wherein the channel impairment is based on the one or more features (block 650). The channel impairment may be a noise, a phase shift, a frequency rotation, and/or an amplitude imbalance. The device may identify the channel impairment using the classification engine associated with the AI/ML system.

As shown in Fig. 6, process 600 may include identifying, by the device and via the AI/ML system, a remedy to resolve the channel impairment (block 660). The remedy may be based on a rule that is mapped to the channel impairment. The remedy may involve adjusting an equalizer setting, adjusting an amplitude or phase imbalance, increasing a signal power, and/or modifying a modulation scheme

As shown in Fig. 6, process 600 may include providing, by the device, an output of the remedy (block 670). The device may provide the output via a user interface, such as a GUI, which may enable the remedy to be applied. In some implementations, the device may obtain an updated software log, where the updated software log may be based on the remedy being applied to an additional network test. The device may generate an updated constellation image based on the updated software log. The device may identify, via the AI/ML system, one or more features associated with the updated constellation image. The device may determine, via the AI/ML system, whether the channel impairment has been resolved based on the one or more features associated with the updated constellation image. The device may store the updated constellation image in a database, where the updated constellation image may be used for training the AI/ML system.

In some implementations, the device may obtain, as part of a training phase, historical data that includes a plurality of constellation images, where the plurality of constellation images may be labeled with known channel impairments. The device may apply a pre-processing to the plurality of constellation images. The device may identify features from the plurality of constellation images, wherein the features are associated with the known channel impairments. The device may train the AI/ML system to associate specific feature patterns with relevant corresponding channel impairments. In some implementations, the device may obtain, as part of the training phase, real data that includes a plurality of constellation images. The real data may be associated with one or more real world networks. The device may apply a pre-processing to the plurality of constellation images. The device may identify features from the plurality of constellation images. The device may train the AI/ML system to associate specific feature patterns with relevant corresponding channel impairments. In some implementations, the device may use both the historical data and the real data as part of the training phase.

Although Fig. 6 shows example blocks of process 600, in some implementations, process 600 may include additional blocks, fewer blocks, different blocks, or differently arranged blocks than those depicted in Fig. 6. Additionally, or alternatively, two or more of the blocks of process 600 may be performed in parallel.

The foregoing disclosure provides illustration and description, but is not intended to be exhaustive or to limit the implementations to the precise forms disclosed. Modifications and variations may be made in light of the above disclosure or may be acquired from practice of the implementations.

As used herein, the term "component" is intended to be broadly construed as hardware, firmware, or a combination of hardware and software. It will be apparent that systems and/or methods described herein may be implemented in different forms of hardware, firmware, and/or a combination of hardware and software. The actual specialized control hardware or software code used to implement these systems and/or methods is not limiting of the implementations. Thus, the operation and behavior of the systems and/or methods are described herein without reference to specific software code - it being understood that software and hardware can be used to implement the systems and/or methods based on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various implementations. In fact, many of these features may be combined in ways not specifically recited in the claims and/or disclosed in the specification. Although each dependent claim listed below may directly depend on only one claim, the disclosure of various implementations includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiple of the same item.

When "a processor" or "one or more processors" (or another device or component, such as "a controller" or "one or more controllers") is described or claimed (within a single claim or across multiple claims) as performing multiple operations or being configured to perform multiple operations, this language is intended to broadly cover a variety of processor architectures and environments. For example, unless explicitly claimed otherwise (e.g., via the use of "first processor" and "second processor" or other language that differentiates processors in the claims), this language is intended to cover a single processor performing or being configured to perform all of the operations, a group of processors collectively performing or being configured to perform all of the operations, a first processor performing or being configured to perform a first operation and a second processor performing or being configured to perform a second operation, or any combination of processors performing or being configured to perform the operations. For example, when a claim has the form "one or more processors configured to: perform X; perform Y; and perform Z," that claim should be interpreted to mean "one or more processors configured to perform X; one or more (possibly different) processors configured to perform Y; and one or more (also possibly different) processors configured to perform Z."

No element, act, or instruction used herein should be construed as critical or essential unless explicitly described as such. Also, as used herein, the articles "a" and "an" are intended to include one or more items, and may be used interchangeably with "one or more." Further, as used herein, the article "the" is intended to include one or more items referenced in connection with the article "the" and may be used interchangeably with "the one or more." Furthermore, as used herein, the term "set" is intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of").

## Claims

1. A method, comprising:
obtaining, by a device and as part of an inference phase, a software log associated with a network test;
generating, by the device, a constellation image based on the software log, wherein the constellation image indicates a channel constellation associated with the software log;
providing, by the device, the constellation image to an artificial intelligence or machine learning, AI/ML, system;
identifying, by the device and via the AI/ML system, one or more features associated with the constellation image;
identifying, by the device and via the AI/ML system, a channel impairment associated with the constellation image, wherein the channel impairment is based on the one or more features;
identifying, by the device and via the AI/ML system, a remedy to resolve the channel impairment; and
providing, by the device, an output of the remedy.

2. The method of claim 1, wherein the one or more features include one or more of: a shape of constellation points in the channel constellation, a spread of constellation points in the channel constellation, or a density of constellation points in the channel constellation, and wherein the one or more features are indicative of one or more channel conditions.

3. The method of claim 1 or claim 2, wherein:
the one or more features are identified using a convolutional neural network, CNN, associated with the AI/ML system; and
the channel impairment associated with the constellation image is identified using a classification engine associated with the AI/ML system.

4. The method of any preceding claim, wherein the channel impairment is one or more of: a noise, a phase shift, a frequency rotation, or an amplitude imbalance.

5. The method of any preceding claim, wherein the remedy is based on a rule that is mapped to the channel impairment, and wherein the remedy involves one or more of: adjusting an equalizer setting, adjusting an amplitude or phase imbalance, increasing a signal power, or modifying a modulation scheme.

6. The method of any preceding claim, further comprising:
obtaining, by the device, an updated software log, wherein the updated software log is based on the remedy being applied to an additional network test;
generating, by the device, an updated constellation image based on the updated software log;
identifying, by the device and via the AI/ML system, one or more features associated with the updated constellation image; and
determining, by the device and via the AI/ML system, whether the channel impairment has been resolved based on the one or more features associated with the updated constellation image.

7. The method of claim 6, further comprising:
storing, by the device, the updated constellation image in a database, wherein the updated constellation image is used for training the AI/ML system.

8. The method of any preceding claim, further comprising:
obtaining, by the device and as part of a training phase, historical data that includes a plurality of constellation images, wherein the plurality of constellation images are labeled with known channel impairments;
applying, by the device, a pre-processing to the plurality of constellation images;
identifying, by the device, features from the plurality of constellation images, wherein the features are associated with the known channel impairments; and
training, by the device, the AI/ML system to associate specific feature patterns with relevant corresponding channel impairments.

9. The method of any preceding claim, further comprising:
obtaining, by the device and as part of a training phase, real data that includes a plurality of constellation images, wherein the real data is associated with one or more real world networks;
applying, by the device, a pre-processing to the plurality of constellation images;
identifying, by the device, features from the plurality of constellation images; and
training, by the device, the AI/ML system to associate specific feature patterns with relevant corresponding channel impairments.

10. The method of any preceding claim, wherein:
the AI/ML system is deployed on an edge server;
the AI/ML system is deployed in a cloud environment;
the AI/ML system is run as a microservice; or
the AI/ML system is associated with a standalone software tool having a user interface.

11. The method of any preceding claim, wherein the software log is associated with a binary format or a textual format.

12. A non-transitory computer-readable medium storing a set of instructions, the set of instructions comprising:
one or more instructions that, when executed by one or more processors of a device, cause the device to perform the method of any preceding claim.

13. A device, comprising:
one or more memories; and
one or more processors, communicatively coupled to the one or more memories, configured to perform the method of any of claims 1 to 11.
